# EUROPEAN PATENT APPLICATION

(11) **EP 1 835 408 A2**
(43) Date of publication of application: **19.09.2007**
(21) Application number: 06118646.6
(22) Date of filing: 09.08.2006
(51) Int. Cl.: G06F 12/08

(54) **Arithmetic processing unit and method for operating cache**

(30) Priority: 18.10.2005 JP 2005303540
(71) Applicant: MATSUSHITA ELECTRIC INDUSTRIAL CO., LTD, Kadoma-shi, Osaka 571-8501 (JP)
(72) Inventor: Kakeda, Masahide Matsushita Electric Ind. Co. Ltd., Osaka-shi Osaka 540-6319 (JP); Ozaki, Shinji Matsushita Electric Ind. Co. Ltd., Osaka-shi Osaka 540-6319 (JP); Yamamoto, Takao Matsushita Electric Ind. Co. Ltd., Osaka-shi Osaka 540-6319 (JP); Nakajima, Masaitsu Matsushita Electric Ind.Co.Ltd., Osaka-shi Osaka 540-6319 (JP)
(74) Representative: Grünecker, Kinkeldey, Stockmair & Schwanhäusser Anwaltssozietät

(57) **Abstract**

A cache access transmission means outputs an access address, obtained from a CPU by way of a local cache access address input means, to a shared address bus via a remote cache access address output means. A cache access control means accesses a cache memory by using the access address obtained from the shared address bus by way of a remote cache access address input means. That is, an access address output from a CPU of a first processor is output from the cache access transmission means and received by the cache access control means so as to be used in accessing a cache memory in a second processor.

## Description

### BACKGROUND OF THE INVENTION

### Field of the Invention

The present invention relates to a multiprocessor-architecture arithmetic processing unit, and particularly relates to an effective technique for enabling efficient use of local caches from processors.

### Description of the Related Art

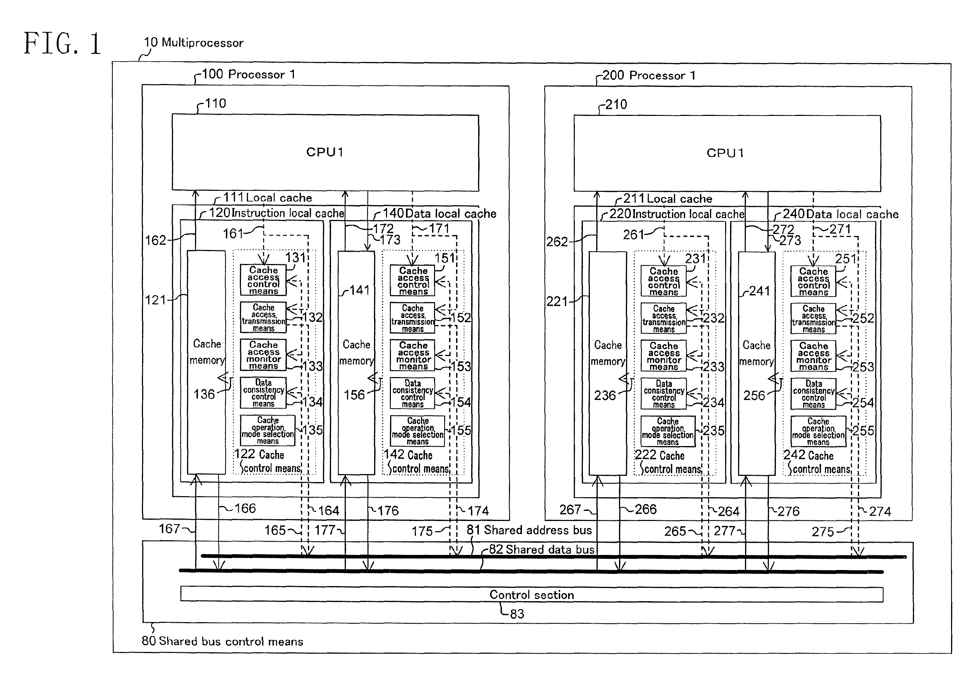

The performance of processors has been improved by increased operating frequency resulting from advances in fabrication process technology and super-pipeline technique, and by parallel processing technology achieved through super-scalar, register rename for raising the efficiency of super-scalar, out-of-order execution, branch prediction, and decrease in CPI (CLOCK CYCLES PER INSTRUCTION) accomplished by speculative execution. Furthermore, in addition to the above-described high-speed packaging technology, processing performance improvement achieved by multiprocessor technology has been often adopted recently.
(Patent document 1) Japanese Laid-Open Publication No. 63-240649 (FIG. 1)
(Patent document 2) Japanese Laid-Open Publication No. 5-197622 (FIG. 1)

(Non-patent document 1) John L. Hennessy & David A. Patterson "Computer Architecture A Quantitative Approach Third Edition" Chapter Six Multiprocessors and Thread-Level Parallelism Snooping Protocols [P.551]

However, when a multiprocessor is used, conventionally used software cannot be used as it is. For example, in the case of built-in software adopting a Linux OS, it is possible to use a multiprocessor after minimizing modification to the software by using an OS such as a multiprocessor-adaptable Linux and by making the OS conform to the POSIX multithreading library. Nevertheless, when built-in software including no OS, and µITRON or other OSes that are lagging behind in terms of adaptation to multiprocessor are adopted, it is necessary to consider man-hours for the software development.

Also, even in a case where adaptation to multiprocessor may be necessary in the future, a development method may be taken in which software for single processor architecture is first developed and then the software is continuously adapted to multiprocessor in the platform thereof in consideration of man-hours for the software development. Furthermore, depending upon a failure point in hardware, all caches are available but a processor or processors are not available in some cases. In such cases, the multiprocessor may be also used as a single processor.

As described above, even for a chip whose performance has been improved by multiprocessor technology, it is necessary to consider a case in which an arithmetic processing unit including a multiprocessor is used as a single processor.

However, in a multiprocessor-architecture arithmetic processing unit, when only a single processor is used, a problem occurs in that the available cache capacity is only equal to the capacity of local caches, causing decrease in the cache capacity and hence in cache hit ratio.

### SUMMARY OF THE INVENTION

It is an object of the present invention to effectively use, in a multiprocessor-architecture arithmetic processing unit, the cache capacity of the multiprocessor and avoid decrease in cache hit ratio, when the multiprocessor is used as a single processor.

According to the present invention, when a multiprocessor is used as a single processor, a local cache coupled to a processor that is not to be used is used as a local cache of the processor to be operated by effectively utilizing snoop cache function resource.

Specifically, the present invention is directed to an arithmetic processing unit including a plurality of processors each having a CPU and a local cache, wherein the plurality of processors are coupled to common shared bus control means including a shared bus and a control section for controlling the shared bus; the local cache of each of the plurality of processors includes a cache memory and cache control means; and the cache control means includes: cache access control means coupled to local cache access address input means for receiving an access address from the CPU and to remote cache access address input means for receiving an access address from the shared bus and configured to access the cache memory by using the access address obtained from either the local cache access address input means or the remote cache access address input means, cache access transmission means coupled to the local cache access address input means and to remote cache access address output means for outputting an access address to the shared bus, and having function of outputting the access address obtained from the local cache access address input means to the shared bus by using the remote cache access address output means, and cache operation mode selection means configured to be capable of setting operation in single cache operation mode or operation in snoop cache operation mode.

According to the present invention, in the cache control means of the local cache, the cache access transmission means is capable of outputting the access address obtained from the CPU by way of the local cache access address input means to the shared bus through the remote cache access address output means. The cache access control means is capable of accessing the cache memory by using the access address obtained from the CPU by way of the local cache access address input means, while being capable of accessing the cache memory by using the access address obtained from the shared bus by way of the remote cache access address input means. That is, an access address output from the CPU in a processor is output to the shared bus from the cache access transmission means in that processor and received from the shared bus by the cache access control means in a different processor so as to be used in accessing the cache memory in that different processor. Therefore, when a processor is operated singly, the cache memories in the other processors can be used as the local caches of that singly operated processor.

And in the inventive arithmetic processing unit, when the cache operation mode selection means sets the single cache operation mode, in a first processor of the plurality of processors, which is to be operated, the local cache access address input means is validated, while the remote cache access address input means is invalidated, the cache access control means accesses the cache memory by using the access address obtained from the local cache access address input means, and the cache access transmission means outputs the access address obtained from the local cache access address input means to the shared bus by using the remote cache access address output means, and in each processor of the plurality of processors other than the first processor, the local cache access address input means is invalidated, while the remote cache access address input means is validated, the cache access control means accesses the cache memory by using the access address obtained from the remote cache access address input means, and the cache access transmission means does not output the access address to the shared bus.

Also, a method for performing cache operation in the inventive arithmetic processing unit includes: a first step of setting the single cache operation mode or the snoop cache operation mode in the cache operation mode selection means; a second step of, when the single cache operation mode is set in the first step, in a first processor of the plurality of processors, which is to be operated, validating the local cache access address input means, while invalidating the remote cache access address input means, accessing the cache memory by the cache access control means by using the access address obtained from the local cache access address input means, and outputting, by the cache access transmission means, the access address obtained from the local cache access address input means to the shared bus by using the remote cache access address output means; and a third step of, when the single cache operation mode is set in the first step, in each processor of the plurality of processors other than the first processor, invalidating the local cache access address input means, while validating the remote cache access address input means, accessing the cache memory by the cache access control means by using the access address obtained from the remote cache access address input means, and outputting no access address by the cache access transmission means to the shared bus.

As described above, according to the present invention, when the multiprocessor-architecture arithmetic processing unit is used as a single processor, the cache memories of the other processors that are not to be operated can be used as the local caches of the processor to be operated. It is therefore possible to avoid decrease in cache hit ratio caused by cache capacity decrease.

### BRIEF DESCRIPTION OF THE DRAWINGS

FIG. 1 illustrates the configuration of a multiprocessor functioning as an arithmetic processing unit according to an embodiment of the present invention.

### DETAILED DESCRIPTION OF THE INVENTION

Hereinafter, embodiments of the present invention will be described with reference to the accompanying drawings.

FIG. **1** illustrates the configuration of a function block in a multiprocessor **10** functioning as an arithmetic processing unit according to this embodiment. The multiprocessor **10** includes two processors **100** and **200** and a shared bus control means **80,** which includes a shared address bus **81** and a shared data bus **82,** serving as shared buses, and a control section **83** for controlling the shared buses. The processors **100** and **200** are both coupled to the shared bus control means **80.**

The processor **100 (200)** includes a CPU **110 (210)** and a local cache **111 (211),** and the local cache **111 (211)** is composed of an instruction local cache **120 (220)** and a data local cache **140 (240).** The instruction local cache **120 (220)** includes a cache memory **121 (221)** and a cache control means **122 (222),** while the data local cache **140 (240)** includes a cache memory **141 (241)** and a cache control means **142 (242).** In this embodiment, the components of the processor **200** that are the same as those of the processor **100** are indicated by reference numerals in parentheses.

The cache control means **122** and **142 (222** and **242)** include: cache access control means **131** and **151 (231** and **251)** for transmitting from the CPU **110 (210)** requests to access the cache memories **121** and **141 (221** and **241);** cache access transmission means **132** and **152 (232** and **252)** for transmitting the contents of access to the other local cache; cache access monitor means **133** and **153 (233** and **253)** for monitoring contents accessed by the other local cache; data consistency control means **134** and **154 (234** and **254)** for controlling data transmission between the CPU **110 (210)** and an external memory and the data consistency thereof and controlling data transmission among the caches and the data consistency thereof; and cache operation mode selection means **135** and **155 (235** and **255)** for storing cache operation mode that indicates whether each local cache **111 (211)** in the multiprocessor **10** operates as a snoop cache or as a single cache.

The cache operation mode selection means **135, 155, 235,** and **255** are composed of registers, for example, and configured so as to be capable of setting either a snoop cache operation mode or a single cache operation mode according to an external setting signal in common.

The instruction local cache **120 (220)** is coupled to the CPU **110 (210)** and to the shared bus control means **80.** A local cache access address input means **161 (261)** for transmitting a fetch address from the CPU **110 (210),** and a local cache access data output means **162 (262)** for transmitting an instruction corresponding to the fetch address from the CPU **110 (210)** are provided between the instruction local cache **120 (220)** and the CPU **110 (210).**

There are provided, between the instruction local cache **120 (220)** and the shared bus control means **80,** a remote cache access address output means **164 (264)** for transmitting a fetch address from the instruction local cache **120 (220),** and a remote cache access data input means **167 (267)** for transmitting an instruction, which corresponds to the fetch address from the instruction local cache **120 (220),** and shared data from the other local caches **140, 220,** and **240 (120, 140,** and **240).** The remote cache access address output means **164 (264)** is coupled to the shared address bus **81** of the shared bus control means **80,** while the remote cache access data input means **167 (267)** is coupled to the shared data bus **82** of the shared bus control means **80.** And a remote cache access address input means **165 (265)** for transmitting the contents of access of the other local caches **140, 220,** and **240 (120, 140,** and **240)** and a remote cache access data output means **166 (266)** for transmitting data from the instruction local cache **120 (220)** to the shared bus control means **80** are provided for data transmission to/from the other local caches **140, 220,** and **240 (120, 140,** and **240).** The remote cache access address input means **165 (265)** is coupled to the shared address bus **81** of the shared bus control means **80,** while the remote cache access data output means **166 (266)** is coupled to the shared data bus **82** of the shared bus control means **80.**

The data local cache **140 (240)** is coupled to the CPU **110 (210)** and to the shared bus control means **80.** There are provided, between the data local cache **140 (240)** and the CPU **110 (210),** a local cache access address input means **171 (271)** for transmitting read and write addresses from the CPU **110 (210),** a local cache access data output means **172 (272)** for transmitting data corresponding to the read address from the CPU **110 (210),** and a local cache access data input means **173 (273)** for transmitting data corresponding to the write address from the CPU **110 (210).**

Between the data local cache **140 (240)** and the shared bus control means **80,** there are provided a remote cache access address output means **174 (274)** for transmitting data-read and data-write addresses from the data local cache **140 (240),** and a remote cache access data input means **177 (277)** for transmitting data, which corresponds to the read address from the data local cache **140 (240),** and shared data from the other local caches **120, 220,** and **240 (120, 140,** and **220).** The remote cache access address output means **174 (274)** is coupled to the shared address bus **81** of the shared bus control means **80,** while the remote cache access data input means **177 (277)** is coupled to the shared data bus **82** of the shared bus control means **80.** And a remote cache access address input means **175 (275)** for transmitting the contents of access of the other local caches **120, 220,** and **240 (120, 140,** and **220),** and a remote cache access data output means **176 (276)** for transmitting data from the data local cache **140 (240)** to an external memory and the like are also provided for data transmission to/from the other local caches **120, 220,** and **240 (120, 140,** and **220).** The remote cache access address input means **175 (275)** is coupled to the shared address bus **81** of the shared bus control means **80,** while the remote cache access data output means **176 (276)** is coupled to the shared data bus **82** of the shared bus control means **80.**

The cache access control means **131** and **151 (231** and **251)** are coupled to the local cache access address input means **161** and **171 (261** and **271)** for receiving access addresses from the CPU **110 (210),** as well as to the remote cache access address input means **165** and **175 (265** and **275)** for receiving access addresses from the shared address bus **81.** And the cache access control means **131** and **151 (231** and **251)** access the cache memories **121** and **141 (221** and **241)** by using the access addresses received from the local cache access address input means **161** and **171 (261** and **271)** or from the remote cache access address input means **165** and **175 (265** and **275).**

The cache access transmission means **132** and **152 (232** and **252)** are coupled to the local cache access address input means **161** and **171 (261** and **271)** and to the remote cache access address output means **164** and **174 (264** and **274)** for outputting access addresses to the shared address bus **81.** The cache access transmission means **132** and **152 (232** and **252)** are configured so that, upon receipt of access addresses from the local cache access address input means **161** and **171 (261** and **271),** they can output those access addresses to the shared address bus **81** by using the remote cache access address output means **164** and **174 (264** and **274).**

The cache access monitor means **133** and **153 (233** and **253)** are coupled to the remote cache access address input means **165** and **175 (265** and **275).**

The data consistency control means **134** and **154 (234** and **254)** are coupled to the remote cache access address input means **165** and **175 (265** and **275).**

And the cache operation mode selection means **135** and **155 (235** and **255)** are coupled to the cache access control means **131** and **151 (231** and **251),** the cache access transmission means **132** and **152 (232** and **252),** the cache access monitor means **133** and **153 (233** and **253),** and the data consistency control means **134** and **154 (234** and **254).** That is, the cache access control means **131** and **151 (231** and **251),** the cache access transmission means **132** and **152 (232** and **252),** the cache access monitor means **133** and **153 (233** and **253),** and the data consistency control means **134** and **154 (234** and **254)** operate in accordance with operation mode set in the cache operation mode selection means **135** and **155 (235** and **255).**

In this embodiment, the shared address bus **81** and the shared data bus **82** disposed in the shared bus control means **80** are used both in the case of access to the external memory and in the case of access among the caches. However, in order to avoid bus contention as much as possible, a bus for the external memory and a bus for access among the caches may be separately provided, and therefore the present invention is not limited to the above-described configuration.

Also, in FIG. **1,** the input and output means indicated by the solid and dashed arrows are realized by signal-transmitting buses and controllers thereof.

Hereinafter, it will be described how the arithmetic processing unit of FIG. **1** operates in each operation mode.

First, a case in which snoop cache operation mode is set in the cache operation mode selection means **135** and **155 (235** and **255)** will be described.

In memory access from the CPU **110 (210)** to the instruction local cache **120 (220)** and to the data local cache **140 (240),** the cache access control means **131** and **151 (231** and **251)** receive access addresses to the cache memories **121** and **141 (221** and **241)** by using the local cache access address input means **161** and **171 (261** and **271)** so as to allow the local cache access by the CPU **110 (210)** thereof and then access the cache memories **121** and **141 (221** and **241)** by way of cache memory address output means **136** and **156 (236** and **256).**

At this time, in the case of (non-cache) read access in which no caches will be used, (non-cache) write access in which no caches will be used, (cache) write access in which caches will be used, and cache miss access in (cache) read access in which caches will be used, the cache access transmission means **132** and **152 (232** and **252)** transmit, as transmission signals, the access addresses obtained by the local cache access address input means **161** and **171 (261** and **271)** to the shared bus control means **80** via the remote cache access address output means **164** and **174 (264** and **274).** With these transmission signals, the other local caches can determine whether or not processing for maintaining data consistency is necessary.

The cache access monitor means **133** and **153 (233** and **253)** search the cache memories **121** and **141 (221** and **241)** of the local cache **120 (220)** thereof, when the transmission signals are transmitted from the cache access transmission means **232** and **252 (132** and **152)** of the other local cache **220 (120).**

And when the transmission signals were transmitted due to non-cache read access or cache miss access in cache read operation, the data consistency control means **134** and **154 (234** and **254)** operate as follows. When the local cache **120 (220)** thereof stores access target data in the other local cache **220 (120),** the data consistency control means **134** and **154 (234** and **254)** exercise control so that the local cache **120 (220)** thereof outputs the target data or the target entry data to the shared bus control means **80.**

If the transmission signals were transmitted due to cache hit access in cache write operation, the data consistency control means **134** and **154 (234** and **254)** operate as follows. When the local cache **120 (220)** thereof stores access target data in the other local cache **220 (120),** the data consistency control means **134** and **154 (234** and **254)** exercise control so that the local cache **120 (220)** thereof updates, as memory information, the target data output from the other local cache **220 (120)** to the shared bus control means **80** or invalidates the target entry memory information.

If the transmission signals were transmitted due to cache miss access in cache write operation, the data consistency control means **134** and **154 (234** and **254)** operate as follows. When the local cache **120 (220)** thereof stores access target data in the other local cache **220 (120),** the data consistency control means **134** and **154 (234** and **254)** exercise control so that the local cache **120 (220)** thereof updates, as memory information, the target data output from the other local cache **220 (120)** to the shared bus control means **80** and outputs the target entry data to the shared bus control means **80.** And the data consistency control means **234** and **254 (134** and **154)** of the other local cache **220 (120)** update, as memory information, the target data output to the shared bus control means **80** or invalidate the target entry memory information.

If the transmission signals were transmitted due to non-cache write access, the data consistency control means **134** and **154 (234** and **254)** operate as follows. When the local cache **120 (220)** thereof stores access target data in the other local cache **220 (120),** the data consistency control means **134** and **154 (234** and **254)** exercise control so that the local cache **120 (220)** thereof updates, as memory information, the target data output from the other local cache **220 (120)** to the shared bus control means **80** or invalidates the target entry memory information.

The data consistency control means **134** and **154 (234** and **254)** also control data transmission to/from the external memory and the data consistency thereof. In this embodiment, it has been described that even in the case of non-cache access, control by the data consistency control means is performed so that the target data is updated as memory information or the target entry memory information is invalidated. However, non-cache access can be considered as access in which no data consistency control is performed, and the present invention is thus not limited to the above description.

Next, a case in which single cache operation mode is set in the cache operation mode selection means **135** and **155 (235** and **255)** will be discussed. In this case, it is assumed that the processor **100,** as the first processor, operates as a single processor. Selection of the processor to be operated may be made by register setting, for example, and it is possible to switch the processor to be operated to another processor.

In the local cache **111** in the processor **100,** the local cache access address input means **161** and **171** are validated, while the remote cache access address input means **165** and **175** are invalidated. On the other hand, in the local cache **211** in the processor **200,** the local cache access address input means **261** and **271** are invalidated, while the remote cache access address input means **265** and **275** are validated.

In the processor **100,** the cache access control means **131** and **151** obtain access addresses to the cache memories **121** and **141** by the local cache access address input means **161** and **171** so as to allow local cache access by the CPU **110,** and output the obtained access addresses to the cache memories **121** and **141** via the cache memory address output means **136** and **156.** The cache access transmission means **132** and **152** always transmit, as transmission signals, the access addressees obtained by the local cache access address input means **161** and **171** to the shared address bus **81** of the shared bus control means **80** by way of the remote cache access address output means **164** and **174.** These transmission signals allow the local cache **220** in the processor other than the processor **100,** that is, in the processor **200,** to operate as the local cache for the CPU **110.**

On the other hand, in the processor **200,** the cache access control means **231** and **251** obtain access addresses to the cache memories **221** and **241** by the remote cache access address input means **265** and **267** so as to allow local cache access by the CPU **110,** and output the obtained access addresses to the cache memories **221** and **241** through the cache memory address output means **236** and **256.** The cache access transmission means **232** and **252** do not transmit, at any time, the obtained access addressees to the shared address bus **81** of the shared bus control means **80** via the remote cache access address output means **264** and **274.**

In the single cache operation mode, the cache access monitor means **133** and **153 (233** and **253)** do not operate. And the data consistency control means **134** and **154 (234** and **254)** do not operate in relation with control of data transmission among the caches and the data consistency thereof, and operate only in relation with control of data transmission to/from the external memory and the data consistency thereof.

As described above, when the cache operation mode selection means **135, 155, 235,** and **255** select the snoop cache operation mode, the local cache **111** in the processor **100** and the local cache **211** in the processor **200** operate as the local caches of the respective CPUs **110** and **210,** while being capable of performing the snoop operation as the remote cache of the other CPU **210** and **110.**

Also, when the cache operation mode selection means **135, 155, 235,** and **255** select the single cache operation mode, the local cache **111** in the processor **100** and the local cache **211** in the processor **200** are both accessed by way of the cache memory address output means **136, 156, 236,** and **256** in accordance with access addresses obtained from the CPU **110** through the local cache access address input means **161** and **171.** That is, the local caches **111** and **211** are both allowed to operate as the local caches of the CPU **110.** It is therefore possible to avoid decrease in cache hit ratio caused by cache capacity decrease.

In the exemplary case described in this embodiment, a multiprocessor including two processors is used, but the present invention is not limited to this. A multiprocessor including three or more processors can also be realized in the same manner as in this embodiment. In that case, in the single cache operation mode, all cache memories can be used as single caches of the CPU to be operated, such that the same effects as those of this embodiment can be achieved.

Although, for ease of explanation, transmission between the data local caches has only been mentioned as transmission between the caches in part of the descriptions in this embodiment, the present invention is not limited to this, but transmission between the instruction local caches can also be realized in the same manner.

According to the present invention, when a multiprocessor-architecture arithmetic processing unit is used as a single processor, decrease in cache hit ratio is avoided. The present invention is thus effective in enhancing the performance of an arithmetic processing unit, when the arithmetic processing unit is used as a single processor, for example.

## Claims

1. An arithmetic processing unit including a plurality of processors each having a CPU and a local cache, wherein
the plurality of processors are coupled to common shared bus control means including a shared bus and a control section for controlling the shared bus;
the local cache of each of the plurality of processors includes a cache memory and cache control means; and
the cache control means includes:
cache access control means coupled to local cache access address input means for receiving an access address from the CPU and to remote cache access address input means for receiving an access address from the shared bus and configured to access the cache memory by using the access address obtained from either the local cache access address input means or the remote cache access address input means,
cache access transmission means coupled to the local cache access address input means and to remote cache access address output means for outputting an access address to the shared bus, and having function of outputting the access address obtained from the local cache access address input means to the shared bus by using the remote cache access address output means, and
cache operation mode selection means configured to be capable of setting operation in single cache operation mode or operation in snoop cache operation mode.

2. The arithmetic processing unit of Claim 1, wherein when the cache operation mode selection means sets the single cache operation mode,
in a first processor of the plurality of processors, which is to be operated,
the local cache access address input means is validated, while the remote cache access address input means is invalidated,
the cache access control means accesses the cache memory by using the access address obtained from the local cache access address input means, and
the cache access transmission means outputs the access address obtained from the local cache access address input means to the shared bus by using the remote cache access address output means, and
in each processor of the plurality of processors other than the first processor,
the local cache access address input means is invalidated, while the remote cache access address input means is validated,
the cache access control means accesses the cache memory by using the access address obtained from the remote cache access address input means, and
the cache access transmission means does not output the access address to the shared bus.

3. A method for performing cache operation in the arithmetic processing unit of Claim 1, the method comprising:
a first step of setting the single cache operation mode or the snoop cache operation mode in the cache operation mode selection means;
a second step of, when the single cache operation mode is set in the first step, in a first processor of the plurality of processors, which is to be operated,
validating the local cache access address input means, while invalidating the remote cache access address input means,
accessing the cache memory by the cache access control means by using the access address obtained from the local cache access address input means, and
outputting, by the cache access transmission means, the access address obtained from the local cache access address input means to the shared bus by using the remote cache access address output means; and
a third step of, when the single cache operation mode is set in the first step, in each processor of the plurality of processors other than the first processor,
invalidating the local cache access address input means, while validating the remote cache access address input means,
accessing the cache memory by the cache access control means by using the access address obtained from the remote cache access address input means, and
outputting no access address by the cache access transmission means to the shared bus.
